# EUROPÄISCHE PATENTSCHRIFT

(11) **EP 0 753 159 B1**
(45) Veröffentlichungstag und Bekanntmachung des Hinweises auf die Patenterteilung: **02.09.1998**
(21) Anmeldenummer: 95913050.1
(22) Anmeldetag: 23.03.1995
(51) Int. Cl.: G01S 13/82, G01S 13/76

(54) **FAHRZEUGGERÄT FÜR TRANSPONDERBETRIEB**
VEHICLE-MOUNTED TRANSPONDER
TRANSPONDEUR MONTE A BORD D'UN VEHICULE

(30) Priorität: 29.03.1994 DE 4410896
(43) Veröffentlichungstag der Anmeldung: 15.01.1997
(73) Patentinhaber: ROBERT BOSCH GMBH, 70442 Stuttgart (DE)
(72) Erfinder: KERSKEN, Ulrich, D-31141 Hildesheim (DE); GRABOW, Wilhelm, D-31135 Hildesheim (DE); DETLEFSEN, Wolfgang, D-31139 Hildesheim (DE)
(86) Internationale Anmeldenummer: DE9500403
(87) Internationale Veröffentlichungsnummer: WO9526511

(56) Entgegenhaltungen:
- EP-A- 0 449 720
- EP-A- 0 486 367
- EP-A- 0 567 905
- WO-A-93/21540
- US-A- 5 254 997

## Beschreibung

### Stand der Technik

Die Erfindung geht aus von einem Fahrzeuggerät mit wenigstens einer Empfangs- und Sendeantenne für eine bidirektionale Daten-Übertragung nach dem Transponderverfahren nach der Gattung des Hauptanspruchs. Aus der DE-OS 42 13 881 ist schon ein Fahrzeuggerät bekannt, das nach dem Transponderverfahren im Bereich von Mikrowellen arbeitet und in der Verkehrsleittechnik zum Austausch von Daten mit einer feststehenden Bake verwendet wird. Dabei erfolgt die Übertragung der Daten von der Bake zum Fahrzeuggerät mittels einer Amplitudenmodulation (Downlink). In umgekehrter Richtung (Uplink) wird nach dem Transponderverfahren von der Bake ein unmoduliertes Trägersignal gesendet, das vom Fahrzeuggerät moduliert und zur Bake zurückgesendet wird. Bei der Signalübertragung zwischen der Bake und dem Fahrzeug können sich die Wellen nicht nur auf dem direkten Weg ausbreiten, sondern auch über Reflexionen, beispielsweise an der Fahrbahn, an der Motorhaube oder an anderen vorbeifahrenden Fahrzeugen. Durch diese Mehrwegeausbreitung entstehen am Empfangsort Überlagerungen der einzelnen Wellen, so daß sich, je nach Phasenlage der einzelnen Wellen, eine Vergrößerung oder Verringerung der resultierenden Gesamtfeldstärke ergibt. Dieser als Interferenzschwund oder Fading bekannte Effekt kann sich störend auf die Übertragungssicherheit auswirken. Dies gilt insbesondere für den Uplink-Betrieb, weil hier die Übertragungsstrecke zweimal durchlaufen werden muß. Bei dem bekannten Stand der Technik wird dieses Problem beispielsweise dadurch gelöst, daß durch Raumdiversity bzw. Antennendiversity mit mindestens zwei Antennenelementen an dem Fahrzeuggerät jeweils dasjenige Antennenelement für die Modulation im Uplink-Betrieb ausgewählt wird, das den größten Signalpegel empfängt. Dieses Verfahren ist jedoch nicht für alle Betriebszustände sicher genug, so daß es dennoch zu Störungen in der Übertragung kommen kann.

Aus der WO-A-9321540 ist ein Verfahren und ein System zur Bestimmung der Position und der Richtung eines bewegten Objektes bekannt. Das System arbeitet nach dem Transponderverfahren. Ein feststehender Sender sendet im Downlink ein Trägersignal, daß vom Fahrzeuggerät moduliert und im Uplink zum feststehenden Bakengerät zurückgesendet wird. Das Fahrzeuggerät weist darüberhinaus einen Verstärker auf, der zur Hochfrequenzverstärkung des Downnlinksignals verwendbar ist.

### Vorteile der Erfindung

Das erfindungsgemäße Fahrzeuggerät mit den kennzeichnenden Merkmalen des Hauptanspruchs hat demgegenüber den Vorteil, daß das durch Interferenzschwund oder Fading beeinflußte Empfangssignal mittels eines Hochfrequenzverstärkers zunächst verstärkt wird, bevor es demoduliert wird. Dadurch können starke Pegelschwankungen des Empfangssignals ausgeglichen werden, so daß dadurch die Datenübertragung sicherer wird. Ein weiterer Vorteil ist, daß durch die Verstärkung des Empfangssignals die Reichweite der Übertragungsstrecke vergrößert wird, so daß auch bei hohen Geschwindigkeiten des Fahrzeugs noch genügend Zeit zur Übertragung aller Daten zur Verfügung steht.

Durch die in den abhängigen Ansprüchen aufgeführten Maßnahmen sind vorteilhafte Weiterbildungen und Verbesserungen des im Hauptanspruch angegebenen Fahrzeuggerätes möglich. Besonders vorteilhaft ist, daß der Verstärker für das Uplink-Signal auch im Downlink-Betrieb nach einem vorgegebenen Algorithmus einstellbar ist, der der Wegstrecke der Signale anpaßbar ist.

Das verstärkte Hochfrequenzsignal wird in einer nachgeschalteten Demodulator-/Modulatorschaltung zugeführt, die im Downlink-Betrieb das empfangene Downlink-Signal demoduliert und im Uplink-Betrieb den empfangenen Träger moduliert.

Dabei ist vorteilhaft, daß zum Teil dieselben Bauteile sowohl im Downlink-Betrieb für die Demodulation, als auch im Uplink-Betrieb für die Modulation verwendet werden.

Durch die Verwendung eines Verstärkers genügt zum Empfang des Downlink-Signals bzw. des unmodulierten Trägersignals im Uplink-Betrieb ein einziges Antennenelement, so daß auch dadurch das Fahrzeuggerät vereinfacht ausgeführt werden kann. Die vereinfachte Ausführung begünstigt eine kleine Bauform, so daß das Fahrzeuggerät dann beispielsweise im Bereich der Windschutzscheibe oder Heckscheibe des Fahrzeugs angebracht werden kann. Im Empfangsbereich einer Bake kann es zur Übertragung von Verkehrsleit-, Navigationsdaten oder zur Gebührenerfassung verwendet werden.

### Zeichnung

Zwei Ausführungsbeispiele der Erfindung sind in der Zeichnung dargestellt und der nachfolgenden Beschreibung näher erläutert. Es zeigen Figur 1 ein Prinzipbild für die Datenübertragung, Figur 2 zeigt ein Blockschaltbild eines ersten Ausführungsbeispiels, Figur 3 zeigt ein Blockschaltbild eines zweiten Ausführungsbeispiels, Figur 3a zeigt eine Variante des zweiten Ausführungsbeispiels, Figur 4 zeigt eine erste Anordnung von einer Demodulator-/Modulatorschaltung und Figur 5 zeigt eine zweite Anordnung von einer Demodulator-/Modulatorschaltung und Figur 6 zeigt eine dritte Demodulator-/Modulatorschaltung.

### Beschreibung der Ausführungsbeispiele

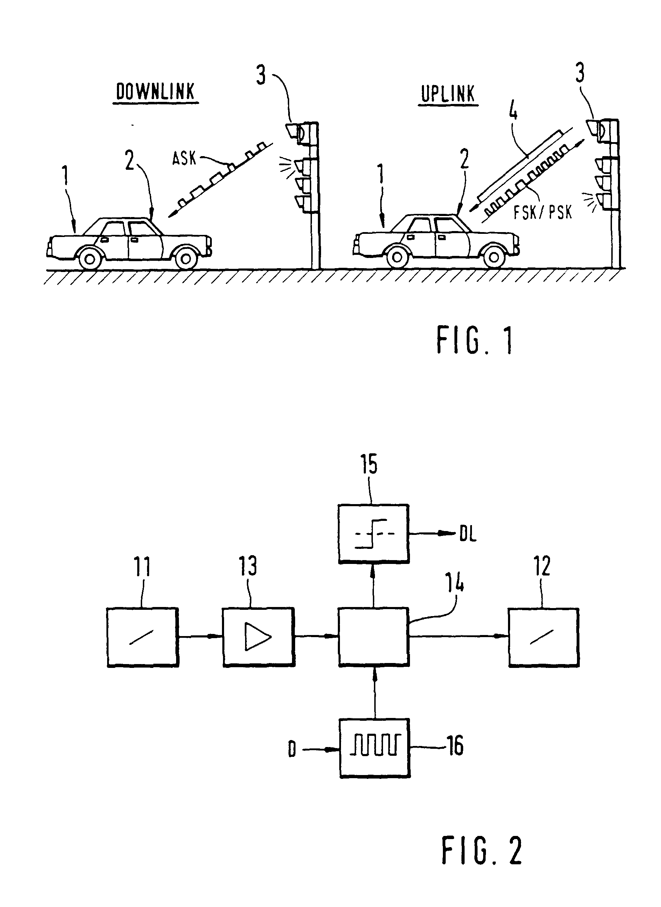

Figur 1 zeigt ein Fahrzeug 1, das sich auf einer Straße im Sende- bzw. Empfangsbereich einer Bake 3 befindet. Die Bake 3 ist als feststehende Sende-/Empfangseinrichtung ausgebildet, die vorzugsweise auf einem Ampelträger oder einer Schilderbrücke angebracht ist. Im linken Teil der Figur 1 wird die prinzipielle Datenübertragung im Downlink-Betrieb zwischen der Bake 3 und einem Fahrzeuggerät 2 dargestellt. Das Fahrzeuggerät 2 ist vorzugsweise an der Windschutzscheibe oder der Heckscheibe des Fahrzeugs angebracht und mit seiner Antenne zur Bake 3 ausgerichtet. Sowohl das Bakengerät 3 als auch das Fahrzeuggerät 2 sind per se bekannt, so daß sie nicht näher beschrieben werden müssen. Bevorzugt wird für die Datenübertragung ein Frequenzbereich von 5,8 GHz verwendet, der gemäß den CEPT-Empfehlungen als Standard-Frequenzbereich angestrebt wird. Die Übertragung kann natürlich auch mit jeder anderen Frequenz durchgeführt werden. Im Downlink-Betrieb erfolgt die Datenübertragung vorzugsweise mit Amplitudenmodulation (ASK). Im rechten Teil der Figur 1 wird die Datenübertragung im Uplink-Betrieb vom Fahrzeug 1 zur Bake 3 schematisch dargestellt. Hier wird das Transponderverfahren verwendet, wobei die Bake 3 ein unmoduliertes Trägersignal (CW-Träger) 4 aussendet, das vom Fahrzeuggerät 2 empfangen wird. Dieses unmodulierte Trägersignal wird vom Fahrzeuggerät 2 mit den zu übertragenden Daten moduliert an die Bake 3 zurückgesendet. Vorzugsweise geschieht dies durch Frequenz- (FSK) oder Phasenmodulation (PSK) eines Unterträgers, der seinerseits den Träger moduliert. Die Bake 3 demoduliert das Signal und decodiert die entsprechenden Daten.

Figur 2 zeigt ein erstes Blockschaltbild eines ersten Ausführungsbeispiels. Um den erforderlichen Schaltungsaufwand für das Fahrzeuggerät möglichst gering zu halten, wird nur ein Verstärker 13 verwendet, der sowohl im Uplink- als auch im Downlink-Betrieb benutzt wird. Das Blockschaltbild der Figur 2 zeigt daher ein Antennenelement 11, das mit dem Eingang des Verstärkers 13 verbunden ist. Der Ausgang des Verstärkers 13 ist mit einem Demodulator/Modulator 14 verbunden, der beispielsweise mit Dioden ausgeführt ist. Dieser Schaltungsteil 14 demoduliert im Downlink-Betrieb das Empfangssignal, während er im Uplink-Betrieb das empfangene Trägersignal moduliert. Im Downlink-Betrieb wird das demodulierte Signal auf einen Entscheider 15 geführt, so daß dann die Downlink-Daten DL für die weitere Auswertung zur Verfügung stehen. Für den Uplink-Betrieb ist ein Signalgenerator 16 vorgesehen, der je nach der gewünschten Modulationsart einen frequenz- oder phasenmodulierten Unterträger erzeugt. Der Ausgang des Generators 16 ist auf einen entsprechenden Eingang des Modulators 14 geführt und steuert damit den Uplink-Betrieb. Die zu übertragenden Uplink-Informationen sind dann als FSK-oder PSK-Signal im oberen und unteren Seitenband des Trägersignals enthalten. Der Modulator 14 ist mit einem zweiten Antennenelement 12 verbunden, über den im Uplink-Betrieb das modulierte Signal an die Bake 3 zurückgesendet wird.

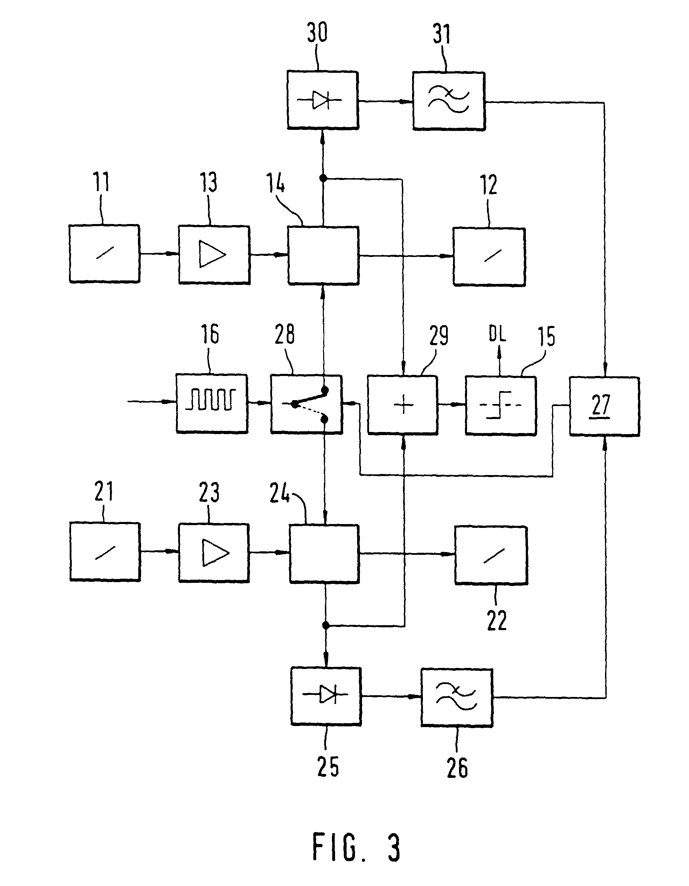

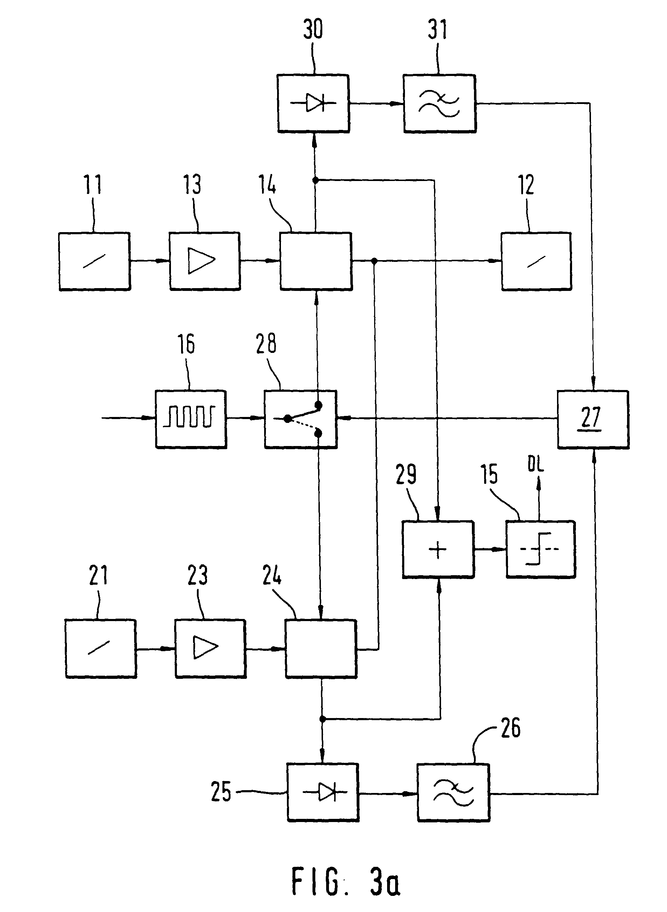

Ein zweites Ausführungsbeispiel der Erfindung ist in Figur 3 als Blockschaltbild dargestellt. Hier wird zur Verbesserung der Übertragungseigenschaften bei Mehrwegeausbreitung das per se bekannte Diversity-Verfahren verwendet, wobei das Fahrzeuggerät erfindungsgemäß mit zusätzlichen Hochfrequenz-Signalverstärkern 13, 23 ausgestattet ist. Die beiden Verstärker 13, 23 sind vorteilhaft als zwei gleichartige Verstärker ausgebildet, die auch in integrierter Bauform als monolithisch integrierter Schaltkreis zur Verstärkung von Mikrowellen ausgebildet sind.

In Anlehnung an das erste Ausführungsbeispiel der Figur 2 ist in Figur 3 das erste Antennenelement 11 mit einem ersten Verstärker 13 verbunden. Der erste Verstärker 13 ist auf einen ersten Demodulator/Modulator 14 geschaltet. Zur Ermittlung des empfangenen Signalpegels ist der Ausgang des Demodulators 14 mit dem Eingang eines ersten Gleichrichters 30 verbunden. Der Ausgang des ersten Gleichrichters 30 ist über einen ersten Tiefpaß 31 auf einen Eingang eines Vergleichers 27 geführt. Im Modulationsbetrieb werden die Uplink-Daten auf einen FSK- bzw. PSK-Generator 16 geführt. Der Signalgenerator 16 ist mit einem Schalter 28 verbunden, der wahlweise in Abhängigkeit von der Auswahl des Vergleichers 27 den Generator 16 mit dem Steuereingang des ersten Demodulators/Modulators 14 verbindet.

Der erste Demodulator/Modulator 14 ist mit einem Ausgang mit einem dritten Antennenelement 12 verbunden, über das im Uplink-Betrieb die Uplink-Daten an die Bake 3 gesendet werden. In gleicher Weise ist der zweite Teil dieser Schaltung wie folgt aufgebaut. Ein zweites Antennenelement 21 ist mit einem zweiten Verstärker 23 verbunden. Der Ausgang des zweiten Verstärkers 23 ist mit einem Eingang eines zweiten Demodulators/Modulators 24 verbunden. Im Uplink-Betrieb wird nun der Generator 16 über den Schalter 28 unter bestimmten Bedingungen auf den Demodulator/Modulator 24 geschaltet. Der zweite Demodulator/Modulator 24 ist mit einem Ausgang mit einem vierten Antennenelement 22 verbunden, über das im Uplink-Betrieb die Uplink-Daten an die Bake 3 gesendet werden. Der zweite Demodulator/Modulator 24 ist über einen zweiten Gleichrichter 25 und einen nachgeschalteten zweiten Tiefpaß 26 auf einen zweiten Eingang des Vergleichers 27 geschaltet. Der Vergleicher 27 steuert in Abhängigkeit der Eingangspegel seiner beiden Eingänge den Schalter 28, der vorzugsweise als Halbleiterschalter ausgebildet ist. Downlink- und Uplink-Betrieb werden abwechselnd nacheinander vorgenommen, wobei der Zeitraum für den Uplink-Betrieb häufig kürzer ist als der für den Downlink-Betrieb. Der Vergleicher 27 nimmt die Auswertung der Signalpegel während des Downlink-Betriebes vor und speichert seine Einstellung für den folgenden Uplink-Betrieb. Auf diese Weise wird die Datenübertragung im Uplink-Betrieb immer über denjenigen Zweig vorgenommen, der im vorausgegangenen Downlink-Betrieb den höheren Eingangspegel geführt hat. Der Vergleicher 27 wertet dabei die Ausgangspegel der beiden Demodulatorsignale der am Ausgang der Demodulator/Modulatoren 14 bzw. 24 derart aus, daß er den Umschalter 28 jeweils auf den Kreis schaltet, der den größten Empfangspegel aufweist.

Der Demodulator/Modulator im Kreis mit dem niedrigeren Empfangspegel, der im folgenden Uplink-Betrieb nicht mit dem Signalgenerator 16 verbunden ist, ist so geschaltet, daß über das mit ihm verbundene Antennenelement keine Welle aus diesem Empfangszweig abgestrahlt wird.

Im Downlink-Betrieb werden die Downlink-Daten wie folgt ausgewertet. Das von dem ersten und zweiten Antennenelement 11 bzw. 21 empfangene Signal wird über die beiden Demodulatoren 14 bzw. 24 demoduliert und in einem Addierer 29 addiert. Danach werden sie einem Entscheider 15 zugeführt, an dessen Ausgang die Downlink-Daten verfügbar sind. Basisbandverstärker sind hier zur besseren Übersicht nicht eingezeichnet, sie können aber bei Bedarf vorgesehen werden.

Die einzelnen Baugruppen sind per se bekannt und müssen daher nicht näher erläutert werden.

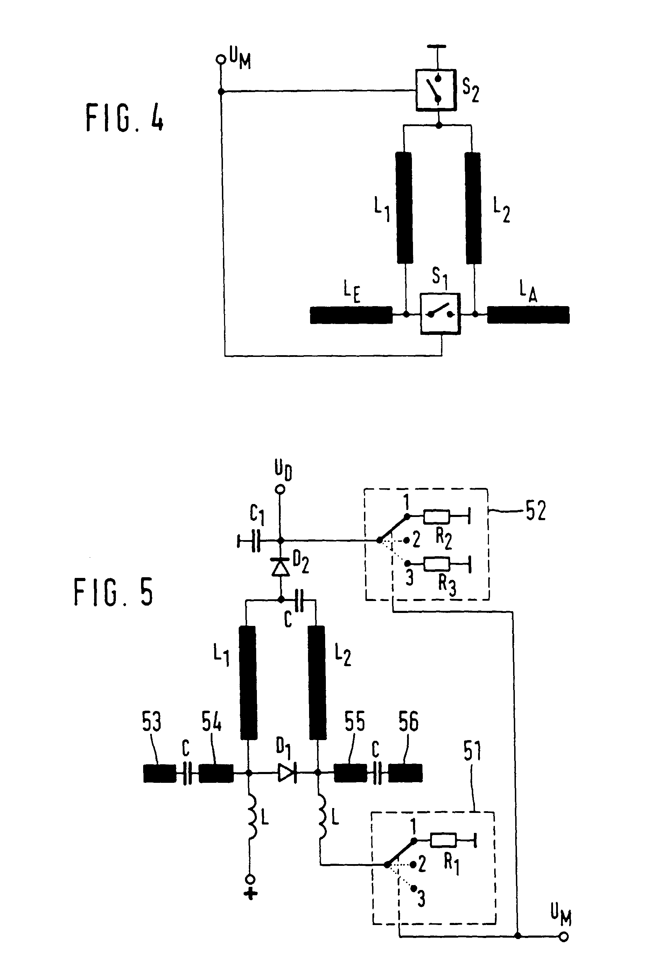

Im folgenden wird anhand der Figuren 4 und 5 die Wirkungsweise dieser beiden Ausführungsbeispiele näher erläutert. Die Demodulator-Modulatorschaltung 14 bzw. 24 stellt eine wichtige Baugruppe des Fahrzeuggerätes 2 dar. Zunächst soll die Modulationsschaltung betrachtet werden. Da das Fahrzeuggerät insgesamt preiswert sein soll, werden schaltungstechnisch einfache Lösungen bevorzugt. Im Uplink-Betrieb werden als Modulationsverfahren daher die Amplitudentastung (0/1) oder Phasentastung (1/-1 bzw. 0° und 180° Phase) bevorzugt, wobei bei der Phasentastung die gesamte Signalenergie des empfangenen Trägersignals wieder abgestrahlt wird, bei Amplitudentastung dagegen nur die Hälfte der Energie (-3 dB). Daraus ist erkennbar, daß die Phasentastung effektiver ist. Figur 4 zeigt ein einfaches Ausführungsbeispiel für eine Phasen- oder Amlitudentastung. Die Modulationsspannung UM steuert dabei die beiden Schalter S₁ und S₂. Der Schalter S₁ hat eine Zu- und eine Abführungsleitung L_{E} und L_{A}, die jeweils an einer Seite des Schaltkontaktes des Schalters S₁ angeschlossen sind. An diesen Schaltkontakt sind des weiteren jeweils die Leitungen L₁ und L₂ mit ihrem einen Ende angeschlossen. Ihre beiden zweiten Enden sind zusammengeführt und mit einem Kontakt des Schalters S₂ verbunden. Der zweite Kontakt des Schalters S₂ ist mit Masse verbunden. Charakteristisch ist, daß die Leitungen L₁ und L₂ eine elektrische Länge von λ/4 (λ = Wellenlänge bei der Trägerfrequenz) besitzen und somit für die Entwurfsfrequenz eine Phasenverschiebung von jeweils 90° darstellen. Es ist ebenfalls möglich, Leitungen L₁ und L₂ einer elektrischen Länge von einem ungeradzahligen Vielfachen von λ/4 zu verwenden (z. B. 3/4 λ, 5/4 λ). Sind beide Schalter S₁ und S₂ geschlossen, so wird das Signal direkt vom Eingang zum Ausgang geführt. Am Ende der λ/4-langen Leitungen L₁ und L₂ befindet sich ein Kurzschlußpunkt. Da die Eingangsimpedanz Z_{E} einer am Ende kurzgeschlossenen λ/4-langen Leitung einen Leerlauf darstellt (Z_{E} geht gegen unendlich), beeinflussen die beiden Leitungen L₁ und L₂ das Signal nicht.

Sind beide Schalter S₁ und S₂ dagegen geöffnet, so befinden sich die Leitungen L₁ und L₂ im Signalweg, so daß gegenüber dem vorher genannten Fall eine Phasenverschiebung von 180° entsteht.

Die Schaltung ist auch für eine Amplitudentastung geeignet. In diesem Fall muß eine Austastung des Signals vorgenommen werden, was durch eine gegensinnige Einstellung der beiden Schalter S₁ und S₂ erreicht wird. Ist S₂ geschlossen und S₁ geöffnet, so gelangt das Signal weder direkt noch indirekt über die Leitungen L₁ und L₂ zum Ausgang. Ist der Schalter S₂ geöffnet und der Schalter S₁ geschlossen, so teilt sich das Signal zu gleichen Anteilen auf den direkten Weg über den Schalter S₁ und den indirekten Weg über die Leitungen L₁ und L₂ auf. Am Signalausgang überlagern sich beide gleich großen Signalanteile mit einer Phasenverschiebung von 180° und löschen sich somit aus.

Figur 5 zeigt ein zweites Ausführungsbeispiel für einen Demodulator/Modulator, der nach dem vorgenannten Prinzip arbeitet. Dabei sind die Abführungsleitungen L_{E} und L_{A} durch die Leitungsteile 53, 54 und 55, 56 ersetzt, wobei zwischen den Leitungsteilen 53, 54 und 55, 56 jeweils ein Kondensator C geschaltet ist. Anstelle des Schalters S₁ ist eine Diode D₁ geschaltet. Die Diode D₁ ist anodenseitig zur Einkopplung einer Gleichspannung mit einer Induktivität L verbunden. Kathodenseitig wird eine weitere Induktivität L geschaltet, deren zweites Ende über einen Umschalter mit den Stellungen 1, 2, 3 verbunden ist. In Stellung 1 ist der Umschalter über einen Widerstand R₁ mit Masse verbunden, in Schalterstellung 2 und 3 ist der Schalter offen. Die Steuerung dieses ersten Umschalters 51 erfolgt durch die Modulationsspannung UM in ähnlicher Weise, wie bereits zu Figur 4 beschrieben. Die jeweils beiden zweiten Enden der Leitungen L₁ und L₂ sind ebenfalls über einen Kondensator C miteinander verbunden, wobei an einer Seite des Kondensators C eine Diode D₂ anodenseitig geschaltet ist. Kathodenseitig ist die Diode mit einem Kondensator C₁ auf Masse geschaltet. Andererseits ist sie mit einem zweiten Umschalter 52 verbunden, der ebenfalls die Schaltstellungen 1, 2, 3 aufweist. Der Schaltkontakt 1 wird über einen Widerstand R2 auf Masse geschaltet, der Schaltkontakt 2 ist offen und der Schaltkontakt 3 wird über einen Widerstand R₃ auf Masse geschaltet. Des weiteren kann an der Kathode der Diode D₂ die Demodulationsspannung U_{D} entnommen werden.

Bei der praktischen Ausführung der Schaltung sind die Kondensatoren C und C₁ so gewählt, daß sie für die Trägerfrequenz nahezu einen Kurzschluß darstellen. Die zur Gleichstromeinkopplung dienenden beiden Induktivitäten L bilden für die Trägerfrequenz dagegen einen Leerlauf. Im Uplink-Betrieb werden bei Phasentastung die beiden Umschalter 51, 52 gleichsinnig zwischen den Stufen 1 und 2 umgeschaltet. In Stufe 1 werden die Dioden D₁ und D₂ durchgeschaltet, in Stufe 2 sperren sie. Die Widerstände R₁ und R₂ sind so gewählt, daß zum Durchschalten der Dioden D₁ und D₂ ausreichend hohe Ströme fließen. Bei Amplitudentastung wird z.B. der Umschalter 51 fest auf Stufe 1 gestellt und der Umschalter 52 zwischen Stufe 1 und 2 umgeschaltet. Die Schalter werden durch denn FSK-oder PSK-Generator gesteuert, wie zuvor in Figur 2 und 3 beschrieben wurde.

Bei geeigneter Auswahl der Diode D₂ kann die Schaltung auch zur Demodulation des ASK-modulierten Downlink-Signals verwendet werden. Die Diode D₂ wird dazu in einem geeigneten Bereich ihrer nichtlinearen Kennlinie betrieben, um beispielsweise eine möglichst hohe Empfindlichkeit zu erhalten. Häufig ist es erforderlich, einen geringen Strom durch die Diode D₂ fließen zu lassen. Die Einstellung dieses Stromes geschieht im Demodulationsbetrieb in der Schalterstufe 3 über den Widerstand R₃. Die Diode D₂ arbeitet dann als Detektor. Über den Diodenstrom läßt sich gegebenenfalls auch die Impedanz der Diode verändern. Der demodulierte Datenstrom liegt parallel zum Kondensator C₁ an. Der Umschalter 51 steht ebenfalls auf Schalterstufe 3, damit die Diode D₁ sperrt.

Da die Dioden im allgemeinen keine idealen Schalteigenschaften haben, muß die Schaltung ggf. durch Anpaß- und Kompensationsmaßnahmen ergänzt werden. In weiterer Ausgestaltung der Erfindung sind andere Schaltungsvarianten mit Widerständen in der positiven Spannungsleitung, mit umgedrehten Dioden oder anderen Abgriffen des modulierten Signals ebenfalls vorsehbar.

In Figur 3a ist eine Variation des Blockschaltbildes der Figur 3 dargestellt. Im Unterschied zur Schaltung in Figur 3 wird in der Schaltung der Figur 3a statt zwei Sendeantennenelementen 12, 22 nur eine Sendeantenne 12 benötigt. Die Ausgänge der Demodulatoren/Modulatoren 14, 24 sind zusammengeführt und mit der Sendeantenne 12 verbunden. Diese Zusammenführung ist derart ausgebildet, daß der Demodulator/Modulator, der gerade nicht moduliert, so geschaltet ist, daß er den Signalweg des modulierenden Zweiges vom Modulator zum Antennenelement nicht beeinflußt.

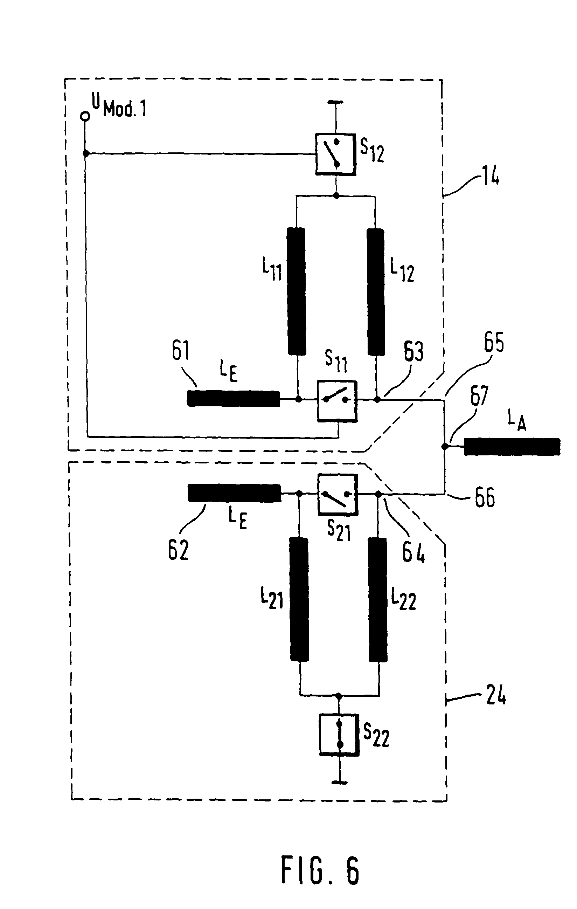

Figur 6 zeigt ein Ausführungsbeispiel für die Zusammenführung der beiden Sendezweige. Für die Demodulatoren/Modulatoren 14, 24 wird jeweils die Grundschaltung verwendet, die in Figur 4 dargestellt ist. Die Schaltung ist symmetrisch aufgebaut. In Figur 6 ist ein Beispiel dargestellt, bei dem der Demodulator/Modulator 14 moduliert und Demodulator/Modulator 24 so geschaltet ist, daß er weder moduliert noch den Signalweg beeinflußt. Aus Übersichtlichkeitsgründen wurden die nicht für diesen Schaltungszustand benötigten Schaltungselemente weggelassen.

Das Charakteristische an dieser Anordnung ist, daß die Ausgangskontakte der Schalter S11 (63) und S21 (64) miteinander verbunden sind. Die Zusammenführung geschieht entweder direkt, dann haben die Leitungen 65 und 66 die Länge Null, oder über elektrische m∗λ/2 lange Leitungen (λ = Wellenlänge bei der Entwurfsfrequenz, mεN). Am Zusammenführungspunkt 67 ist eine Abführungsleitung LA angeschlossen. Weiterhin gilt auch für dieses Schaltungsbeispiel, daß die Leitungen L11, L12, L21 und L22 eine elektrische Länge mit einer ungeradzahligen Vielfachen von λ/4 ((2n-1)∗λ/4, nεN) besitzen.

Die Schalter des für die Dauer des Uplinks abgeschalteten Modulators/Demodulators sind fest eingestellt. Die Schalter des für die Dauer des Uplinks modulierenden Modulators/Demodulators werden entsprechend den Dateninhalten und der Modulation geschaltet. Für das in Figur 6 dargestellte Beispiel ist S21 geöffnet und S22 geschlossen; S11 und S12 werden geschaltet. S21 ist geöffnet und stellt damit im idealen Fall einen Leerlauf (hohe Impedanz) am Ausgang 64 dar. Am Ende der Leitung L22 befindet sich der geschlossene Schalter S22, der im idealen Fall einen Kurzschlußpunkt darstellt und über die λ/4 lange Leitung L22 transformiert am Leitungsanfang ebenfalls einen Leerlauf darstellt. Da die Schalterstellung von S21 und S22 am Ausgang 64 eine hohe Eingangsimpedanz darstellt, wird der Signalweg zwischen Demodulator/Modulator 14 und dem Signalausgang nicht durch die Demodulator/Modulatorschaltung 24 beeinflußt.

Aufgrund des symmetrischen Aufbaus ist diese Betrachtung auch für den umgekehrten Fall gültig.

## Patentansprüche

1. Fahrzeuggerät mit wenigstens einer Empfangs- und Sendeantenne für eine bidirektionale Datenübertragung nach dem Transponderverfahren an eine feststehende Bake, wobei das Übertragungssignal von der Bake zum Fahrzeuggerät (Downlink) vorzugsweise amplitudenmoduliert (ASK) und umgekehrt vom Fahrzeuggerät zur Bake (Uplink) ein von der Bake gesendetes Trägersignal ist, das von dem Fahrzeuggerät über einen Unterträger frequenz -oder phasenmodulierbar ist (FSK- oder PSK-Signal) und zur Bake zurückgesendet wird, und wobei das Fahrzeuggerät (2) wenigstens einen Verstärker (13, 23) aufweist, der zur Hochfrequenzverstärkung des Downlink-Signals (ASK) verwendbar ist, dadurch gekennzeichnet, daß der Verstärker (13, 23) das Downlink-Signal (ASK) und das Uplink-Signal (4) nach einem vorgegebenen Algorithmus, vorzugsweise nach der Quadratformel v_{UL} = v_{DL} x v_{DL} verstärkt, wobei v_{UL} die Verstärkung im Uplink und v_{DL} die Verstärkung im Downlink ist.

2. Fahrzeuggerät nach Anspruch 1, dadurch gekennzeichnet, daß dem wenigstens einen Verstärker (13, 23) ein Demodulator/Modulator (14, 24) nachschaltbar ist, wobei die gemeinsame Schaltung sowohl im Downlink-Betrieb die empfangenen Signale demoduliert als auch im Uplink-Betrieb das Trägersignal moduliert.

3. Fahrzeuggerät nach einem der vorhergehenden Ansprüche, dadurch gekennzeichnet, daß der Demodulator/Modulator (14, 24) zwischen zwei Leitungsteilen (L_{E}, Lₗ, L_{A}, L₂) zwei steuerbare Schalter (S₁, S₂) aufweist, die von der Modulationsspannung (U_{M}) synchron steuerbar sind, wobei der eine Schalter (S2) das eine Ende der zwei Leitungsteile (L1, L2) auf Masse und der andere Schalter (S1) die zweiten Enden der zwei Leitungsteile (L1, L2) kurzschließt (Figur 4).

4. Fahrzeuggerät nach Anspruch 3, dadurch gekennzeichnet, daß die beiden steuerbaren Schalter (S₁, S₂) vorzugsweise durch zwei Dioden (D₁, D₂) ausgebildet sind, deren Arbeitspunkte durch einen Steuerstrom oder eine Steuerspannung beispielsweise durch in Reihe schaltbare Widerstände (R1, R2, R3) einstellbar sind.

5. Fahrzeuggerät nach Anspruch 4, dadurch gekennzeichnet, daß wenigstens eine Diode (D₂; 25, 30) im Downlink zur Demodulation des empfangenen Signals verwendbar ist.

6. Fahrzeuggerät nach einem der vorhergehenden Ansprüche, dadurch gekennzeichnet, daß mit der gleichen Demodulator-/Modulator-Schaltung im Uplink-Betrieb das Trägersignal wahlweise amplituden- oder phasentastbar ist.

7. Fahrzeuggerät nach Anspruch 1, dadurch gekennzeichnet, daß bei einem Fahrzeuggerät mit wenigstens zwei Empfangs- und wenigstens einer Sendeantenne derjenige Demodulator/Modulator im Uplink-Betrieb moduliert, der im vorausgegangenen Downlink-Betrieb den höheren Empfangspegel hatte.

8. Fahrzeuggerät nach Anspruch 7, dadurch gekennzeichnet, daß das Fahrzeuggerät einen Vergleicher/Entscheider (15) aufweist, der den Demodulator/Modulator mit dem höheren Empfangspegel ermittelt und für den Uplink-Betrieb auswählt.

9. Fahrzeuggerät nach einem der vorhergehenden Ansprüche, dadurch gekennzeichnet, daß im Uplink-Betrieb zwei Demodulatoren/Modulatoren (14, 24) mit einer gemeinsamen Sendeantenne verbindbar sind.

10. Fahrzeuggerät nach einem der vorhergehenden Ansprüche, dadurch gekennzeichnet, daß das Fahrzeuggerät (2) nur ein Antennenelement aufweist, das zum Empfang des Downlink-Signals und des unmodulierten Trägersignals im Uplink-Betrieb ausgebildet ist.

11. Fahrzeuggerät nach einem der vorhergehenden Ansprüche, dadurch gekennzeichnet, daß das Fahrzeuggerät (2) zur Übertragung von Daten für Anwendungen in der Verkehrstechnik verwendbar ist, beispielsweise Navigationsdaten, Prüfung einer Zufahrtsberechtigung oder eine Gebührenerfassung.

## Claims

1. Vehicle unit having at least one transmitting and receiving antenna for bidirectional data transmission using the transponder method to a fixed beacon, the transmission signal from the beacon to the vehicle unit (downlink) preferably being amplitude-modulated (ASK) and being, conversely from the vehicle unit to the beacon (uplink), a carrier signal which is sent by the beacon, can be frequency-modulated or phase-modulated by the vehicle unit via a subcarrier (FSK signal or PSK signal) and is sent back to the beacon, and the vehicle unit (2) having at least one amplifier (13, 23) which can be used for radio-frequency amplification of the downlink signal (ASK), characterized in that the amplifier (13, 23) amplifies the downlink signal (ASK) and the uplink signal (4) by using a prescribed algorithm, preferably by using the quadratic formula v_{UL} = v_{DL} × v_{DL}, v_{UL} being the amplification in the uplink and v_{DL} the amplification in the downlink.

2. Vehicle unit according to Claim 1, characterized in that a demodulator/modulator (14, 24) can be connected downstream of the at least one amplifier (13, 23), the common circuit both demodulating the received signals in downlink operation and modulating the carrier signal in uplink operation.

3. Vehicle unit according to one of the preceding claims, characterized in that between two line sections (L_{E}, L₁, L_{A}, L₂) the demodulator/modulator (14, 24) has two controllable switches (S₁, S₂) which can be controlled synchronously by the modulation voltage (U_{M}), one switch (S2) short-circuiting one end of the two line sections (L1, L2) to frame, and the other switch (S1) short-circuiting the second ends of the two line sections (L1, L2) (Figure 4).

4. Vehicle unit according to Claim 3, characterized in that the two controllable switches (S₁, S₂) are preferably formed by two diodes (D₁, D₂) whose operating points can be set by a control current or a control voltage, for example by resistors (R1, R2, R3) which are switchable in series.

5. Vehicle unit according to Claim 4, characterized in that at least one diode (D₂; 25, 30) in the downlink can be used for demodulation of the received signal.

6. Vehicle unit according to one of the preceding claims, characterized in that the same demodulator/-modulator circuit can optionally be used in uplink operation for amplitude shift keying or phase shift keying of the carrier signal.

7. Vehicle units according to Claim 1, characterized in that in a vehicle unit having at least two receiving antennas and at least one transmitting antenna modulation is performed in uplink operation by that demodulator/modulator which had the higher received level in the preceding downlink operation.

8. Vehicle unit according to Claim 7, characterized in that the vehicle unit has a comparator/discriminator (15) which determines the demodulator/modulator with the higher received level and selects it for the uplink operation.

9. Vehicle unit according to one of the preceding claims, characterized in that in uplink operation two demodulators/modulators (14, 24) can be connected to a common transmitting antenna.

10. Vehicle unit according to one of the preceding claims, characterized in that the vehicle unit (2) has only one antenna element, which is designed for receiving the downlink signal and the unmodulated carrier signal in uplink operation.

11. Vehicle unit according to one of the preceding claims, characterized in that the vehicle unit (2) can be used to transmit data for applications in traffic engineering, for example navigation data, checking access authorization or recording charges.

## Revendications

1. Transpondeur de véhicule comprenant au moins une antenne d'émission et une antenne de réception pour un échange bidirectionnel de données entre le procédé à transpondeur et une borne fixe, le signal de transmission étant modulé de préférence en amplitude (ASK) par la borne vers le transpondeur de véhicule (sens descendant) et inversement l'appareil de véhicule vers la borne (sens montant) est un signal de porteuse émis par la borne, qui est modulé par le transpondeur du véhicule par une sous-porteuse, en fréquence et en phase (signal FSK ou signal PSK) et est renvoyé vers la borne, le transpondeur de véhicule (2) comporte au moins un amplificateur (13, 23) utilisé pour l'amplification à haute fréquence du signal descendant (ASK),
caractérisé en ce que
l'amplificateur (13, 23) amplifie le signal descendant (ASK) et le signal montant (4) selon un algorithme prédéterminé, de préférence suivant la forme quadratique v_{UL} = v_{DL} x v_{DL} selon laquelle v_{UL} représente l'amplification dans la branche montante et v_{DL} l'amplification dans la branche descendante.

2. Transpondeur de véhicule selon la revendication 1,
caractérisé en ce qu'
au moins un amplificateur (13, 23) est suivi par un démodulateur/modulateur (14, 24) et le circuit commun démodule les signaux reçus à la fois en mode descendant et en mode montant en modulant la porteuse.

3. Transpondeur de véhicule selon l'une quelconque des revendications précédentes,
caractérisé en ce que
le démodulateur/modulateur (14, 24) comporte deux circuits de commande (S₁, S₂) entre deux points de lignes (L_{E}, L₁, L_{A}, L₂), ces commutateurs étant commandés en synchronisme à partir de la tension de modulation (U_{M}) et un commutateur (S₂) court-circuite une extrémité du second point de liaison (L₁, L₂) à la masse et l'autre commutateur (S₁) commute les secondes extrémités des deux parties de lignes (L₁, L₂) court-circuitées (figure 4).

4. Transpondeur de véhicule selon la revendication 3,
caractérisé en ce que
les deux commutateurs commandés (S₁, S₂) sont constitués de préférence par deux diodes (D₁, D₂) dont les points de fonctionnement sont réglés par exemple par un flux de commande ou par une tension de commande par exemple au niveau d'une rangée de résistances commutables (R₁, R₂, R₃).

5. Transpondeur de véhicule selon la revendication,
caractérisé par
au moins une diode (D₂ ; 25, 30) dans la branche descendante pour démoduler le signal reçu.

6. Transpondeur de véhicule selon l'une quelconque des revendications précédentes,
caractérisé en ce qu'
un même démodulateur/modulateur permet une adaptation de phase et/ou d'amplitude en mode descendant du signal de porteuse.

7. Transpondeur de véhicule selon la revendication 1,
caractérisé en ce qu'
en cas de transpondeur de véhicule ayant au moins deux antennes de réception et au moins une antenne d'émission, le démodulateur/modulateur, qui présentait dans le mode descendant, prédéterminé, le niveau de réception plus élevé, module en mode montant.

8. Transpondeur de véhicule selon la revendication 7,
caractérisé en ce que
le transpondeur de véhicule comporte un comparateur/décideur (15) qui détermine le démodulateur/moduleur de niveau de réception le plus élevé et le sélectionne pour le mode montant.

9. Transpondeur de véhicule selon l'une quelconque des revendications précédentes
caractérisé en ce qu'
en mode montant, deux systèmes démodulateurs/moduleurs (14, 24) sont reliés par une même antenne d'émission.

10. Transpondeur de véhicule selon l'une quelconque des revendications précédentes,
caractérisé en ce que
le transpondeur de véhicule (2) comporte seulement une antenne d'émission réalisée pour recevoir le signal de mode descendant et le signal de porteuse non modulé en mode montant.

11. Transpondeur de véhicule selon l'une quelconque des revendications précédentes,
caractérisé en ce que
le transpondeur de véhicule (2) est utilisable pour transmettre des données pour l'application à une technique de circulation routière, par exemple des systèmes de navigation, des contrôles, une autorisation d'accès ou le prélèvement du péage.
